# EUROPÄISCHE PATENTSCHRIFT

(11) **EP 3 459 342 B1**
(45) Veröffentlichungstag und Bekanntmachung des Hinweises auf die Patenterteilung: **17.06.2020**
(21) Anmeldenummer: 18190703.1
(22) Anmeldetag: 24.08.2018
(51) Int. Cl.: A01F 15/07

(54) **LANDWIRTSCHAFTLICHE RUNDBALLENPRESSE SOWIE VERFAHREN ZUR LADUNG EINER ZUFÜHREINRICHTUNG EINER RUNDBALLENPRESSE**
AGRICULTURAL ROUND BALER AND METHOD FOR FEEDING A CHARGE INTO A ROUND BALER
PRESSE À BALLES RONDES AGRICOLE AINSI QUE PROCÉDÉ DE CHARGEMENT D'UN DISPOSITIF D'ALIMENTATION D'UNE PRESSE À BALLES RONDES

(30) Priorität: 25.09.2017 DE 102017122130
(43) Veröffentlichungstag der Anmeldung: 27.03.2019
(73) Patentinhaber: Usines CLAAS France S.A.S, 57140 St. Rémy / Woippy (FR)
(72) Erfinder: Vagnier, Vincent, 88170 Saint Menge (FR); Baros, Geoffroy, 90130 Montreux Chateau (FR); Hesselmann, Ulrich, 54439 Saarburg (DE)
(74) Vertreter: CLAAS Gruppe

(56) Entgegenhaltungen:
- EP-A1- 1 080 628
- EP-A1- 1 602 269
- EP-A1- 2 229 812
- EP-B1- 0 865 721
- EP-B1- 1 121 850

## Beschreibung

Die vorliegende Anmeldung betrifft eine landwirtschaftliche Rundballenpresse gemäß dem Oberbegriff von Anspruch 1. Diese umfasst eine Presskammer, innerhalb derer Erntegut zu einem Rundballen pressbar ist. Dabei ist es grundsätzlich unerheblich, ob es sich bei der Rundballenpresse um eine sogenannte "Festkammerpresse" mit einer Presskammer konstanten Querschnitts oder um eine Rundballenpresse mit variabler Presskammer handelt, deren Querschnitt im Zuge der Formung eines jeweiligen Rundballens veränderbar ist. Um einen fertiggestellten Rundballen mit einem Wickelmaterial einwickeln zu können, verfügt die Rundballenpresse ferner über eine Zuführeinrichtung. Mittels dieser ist es möglich, der Presskammer das Wickelmaterial zuzuführen, sodass der Rundballen eingewickelt werden kann. Das Wickelmaterial, bei dem es sich beispielsweise um eine Folie oder ein Nylonnetz handeln kann, wird typischerweise auf Wickelrollen vorgehalten.

Weiterhin betrifft die vorliegende Anmeldung ein Verfahren zur Ladung einer Zuführeinrichtung einer Rundballenpresse mit einer neuen Wickelrolle gemäß dem Oberbegriff von Anspruch 9. Ein solches Verfahren ist insbesondere erforderlich, um eine leere Wickelrolle, deren Wickelmaterial vollständig verarbeitet wurde, gegen eine neue Wickelrolle auszutauschen. Diese neue Wickelrolle muss sodann in die Zuführeinrichtung geladen werden.

Rundballenpressen sowie Verfahren der vorstehend beschriebenen Art sind im Stand der Technik bereits bekannt. Hierzu wird zunächst auf die Europäische Patentschrift EP 1 121 850 B1 verwiesen, die eine Rundballenpresse mit einer Zuführeinrichtung vorschlägt, deren Wickelrolle mittels einer sackkarrenähnlichen Ladevorrichtung kombinierbar ist. Hierbei wird die Wickelrolle auf der Ladevorrichtung positioniert und händisch zu der Zuführeinrichtung bzw. der Rundballenpresse bewegt. Dort kann die Ladevorrichtung einseitig eingehängt werden, worauf hin die auf der Ladevorrichtung positionierte Wickelrolle sich in einer schrägen Ausrichtung befindet. Um die Wickelrolle schließlich in die Ladevorrichtung zu heben, ist es nunmehr erforderlich, die Ladevorrichtung an ihrem der Zuführeinrichtung abgewandten Ende zu greifen und mittels Muskelkraft in eine zumindest im Wesentlichen horizontale Position anzuheben. Ausgehend von dieser Position kann die Wickelrolle in die Zuführeinrichtung bzw. eine zugehörige Rollenhalterung geschoben werden.

Die beschriebene Vorrichtung sowie das beschriebene Verfahren sind insofern von Nachteil, als die Beladung zum einen besonders beschwerlich ist und zum anderen ein Beschädigungsrisiko für die zu ladende Wickelrolle mit sich bringt. Dies betrifft insbesondere den Moment des Einschiebens der Wickelrolle ausgehend von der Ladevorrichtung in die Rollenhalterung, im Zuge dessen es infolge Reibung und/oder Anstoßens zu einer Beschädigung des Wickelmaterials kommen kann.

Eine weitere Ausführungsform ist der Europäische Patentschrift EP 0 865 721 B1 entnehmbar, die eine doppelachsig verschwenkbare Ladevorrichtung aufweist. Die Schwenkachsen der Ladevorrichtung sind senkrecht zueinander orientiert, wobei sich eine erste Schwenkachse senkrecht und die zweite Schwenkachse horizontal erstrecken. Die Ladevorrichtung ist seitlich an einem Gehäuse einer zugehörigen Rundballenpresse angeordnet, wobei der Verfahrensschritt des Anhebens der Wickelrolle von einer schrägen Stellung in eine zumindest im Wesentlichen horizontale Stellung mittels einer Hebeeinrichtung unterstützt wird. Die Beladung der Zuführeinrichtung mit einer neuen Wickelrolle ist demzufolge tendenziell leichter als bei der vorstehend beschriebenen Ausführungsform. Gleichwohl weist auch diese Rundballenpresse den Nachteil auf, dass die Wickelrolle im Zuge der Überführung von der Ladevorrichtung in die Zuführeinrichtung einem Beschädigungsrisiko unterliegt. Dies gilt insbesondere dann, wenn das auf der Wickelrolle vorgehaltene Wickelmaterial von einer Folie gebildet ist, die bei Anschlagen an Ecken und Kanten der Zuführeinrichtung leicht beschädigt werden kann.

Der vorliegenden Anmeldung liegt mithin die Aufgabe zugrunde, eine Rundballenpresse bereitzustellen, bei deren Verwendung die Beladung der Zuführeinrichtung mit einer neuen Wickelrolle gegenüber dem Stand der Technik verbessert ist.

Die zugrunde liegende Aufgabe wird erfindungsgemäß mittels einer Rundballenpresse mit den Merkmalen des Anspruchs 1 gelöst. Vorteilhafte Ausgestaltungen sind den Unteransprüchen 2 bis 8 entnehmbar.

Unter einer "Zuführeinrichtung" wird im Sinne der vorliegenden Anmeldung diejenige Einrichtung verstanden, mittels derer eine Wickelrolle aufnehmbar ist und das auf der Wickelrolle vorgehaltene Material der Presskammer der Rundballenpresse zuführbar ist. Hierzu umfasst eine derartige Zuführeinrichtung typischerweise mindestens eine Rollenhalterung, in oder an der eine jeweilige Wickelrolle drehbar gelagert ist, sodass das Wickelmaterial von der Wickelrolle abziehbar ist. Ferner umfasst eine solche Zuführeinrichtung in aller Regel mindestens eine "Zuführrolle", die aktiv antreibbar ist, beispielsweise mittels Koppelung an einen Antrieb der Rundballenpresse. Eine solche Zuführrolle ist dazu geeignet, das Wickelmaterial aktiv von der Wickelrolle abzuziehen und in Richtung der Presskammer zu führen.

Weiterhin ist es üblich, dass eine derartige Zuführeinrichtung mindestens eine "Bremsrolle" umfasst, die an der Rollenhalterung angeordnet ist und dazu geeignet ist, mit der Wickelrolle einzugreifen und eine Rotation derselben zu bremsen bzw. zu stoppen. Dies ist typischerweise notwendig, da die Wickelrolle im Zuge des Abziehens des Wickelmaterials in eine rotatorische Bewegung versetzt wird. Aufgrund der Massenträgheit würde sich diese Bewegung auch nach vollständigem Einwickeln eines jeweiligen Rundballens fortsetzen, obwohl kein weiteres Wickelmaterial von der Wickelrolle abgezogen werden muss. Die Bremsrolle dient mithin dazu, diese fortlaufende Rotation der Wickelrolle zu stoppen.

Um eine jeweilige Wickelrolle an der Zuführeinrichtung rotierbar und gleichwohl ortsfest lagern zu können, verfügt die Zuführeinrichtung über mindestens zwei Tragrollen, die frei rotierbar an der Zuführeinrichtung gelagert sind. Die Wickelrolle ist an der Rollenhalterung auf solchen Tragrollen gelagert, sodass sie sich zum einen in einer stabilen Lage befindet und zum anderen frei um ihre Rotationsachse rotieren kann. Gemäß vorstehender Erläuterung ist dies notwendig, um das Wickelmaterial sukzessive von der Wickelrolle abrollen zu können. Grundsätzlich ist es denkbar, dass die vorstehend beschriebene Bremsrolle in Funktion einer Tragrolle verwendet wird bzw. umgekehrt mindestens eine Tragrolle gleichzeitig als Bremsrolle wirken kann. Somit ist es insbesondere denkbar, dass eine Wickelrolle im Zuge ihrer Verwendung auf zwei Tragrollen frei rotierbar gelagert ist, wobei eine der Tragrollen die Funktion einer Bremsrolle wahrnehmen kann, das heißt als solche bremsbar ausgeführt ist, um wiederum die sich drehende Wickelrolle bei Bedarf bremsen bzw. stoppen zu können.

Unter dem "Ladearm" wird im Sinne der vorliegenden Anmeldung eine Einrichtung verstanden, mittels derer eine jeweilige Wickelrolle in ihre Ladeposition überführbar ist. In dieser Ladeposition ist die Wickelrolle vergleichbar zum Stand der Technik in einer zumindest im Wesentlichen zu den Tragrollen parallelen Ausrichtung gelagert. Dies hat die Bewandtnis, dass die Wickelrolle ausgehend von ihrer Ladeposition an die Tragrollen übergebbar sein soll, was typischerweise mittels Bewegen der Wickelrolle in eine zu den Tragrollen parallele Richtung bewirkt wird. Entsprechend versteht es sich, dass sich die Wickelrolle bei Vorliegen in ihrer Ladeposition zumindest im Wesentlichen auf einem Höhenniveau der Rollenhalterung befindet, sodass ein Höhenversatz zwischen dem Ladearm und den Tragrollen der Rollenhalterung möglichst gering ist. Auf diese Weise wird verhindert, dass die Wickelrolle im Zuge ihrer Übergabe an die Rollenhalterung "herunterfällt".

Die Einschränkungen "im Wesentlichen" sind im Sinne der vorliegenden Anmeldung dahingehend zu verstehen, dass gewisse Abweichungen von einer exakten parallelen Ausrichtung der Wickelrolle relativ zu den Tragrollen sowie von einem exakt gleichen Höhenniveau mit der Rollenhalterung technisch tolerabel sind, um eine jeweilige Wickelrolle erfolgreich an die Zuführeinrichtung zu übergeben. Bezogen auf die Ausrichtung der Wickelrolle ist es mithin ebenso denkbar, dass auf eine gemeinsame Ebene projizierte Längsachsen der Tragrollen sowie der Wickelrolle einen Winkel im Bereich von -10° bis +10° einschließen. Idealerweise liegt dieser Winkel in einem Bereich von -5° bis +5°. Bezogen auf das Höhenniveau der Wickelrolle bei Vorliegen in ihrer Ladeposition ist es erforderlich, dass dieses oberhalb des Höhenniveaus der Tragrollen angeordnet ist, da die Wickelrolle ansonsten im Zuge ihrer Überführung auf die Tragrollen mit selbigen kollidieren würde. Allerdings ist es denkbar, dass die Wickelrolle zumindest leicht oberhalb der Tragrollen angeordnet ist, wobei eine Höhendifferenz maximal 10 cm, vorzugsweise maximal 5 cm, weiter vorzugsweise maximal 2 cm, betragen sollte. Innerhalb dieses Spektrums befindet sich die Wickelrolle bei Vorliegen in ihrer Ladeposition "im Wesentlichen" auf einem Höhenniveau der Rollenhalterung bzw. der zugehörigen Tragrollen.

Erfindungsgemäß weist die Zuführeinrichtung der Rundballenpresse mindestens einen Laufschlitten auf, der auf oder an einer Laufschiene bewegbar gelagert ist. Diese Laufschiene erstreckt sich parallel zu den Tragrollen der Zuführeinrichtung. Der Laufschlitten ist dazu geeignet, eine Wickelrolle bzw. zumindest einen der Zuführeinrichtung zugewandten Endabschnitt derselben zu übernehmen und sodann mitsamt der Wickelrolle entlang der Laufschiene zu fahren. Auf diese Weise kann die Wickelrolle ausgehend von dem Ladearm an die Rollenhalterung übergeben werden.

Die erfindungsgemäße Rundballenpresse hat viele Vorteile. Insbesondere ermöglicht der erfindungsgemäße Laufschlitten eine Bewegung der Wickelrolle in die Rollenhalterung, ohne dass es zu einer Reibung der Wickelrolle bzw. eines äußeren Mantels derselben an den Tragrollen der Zuführeinrichtung kommt. Stattdessen wird die Wickelrolle zumindest an einem Ende auf dem Laufschlitten gelagert, der sodann entlang seiner Laufschiene bewegbar ist, sodass es im Zuge dieser Bewegung des Laufschlittens zu keiner Relativbewegung zwischen dem Laufschlitten und der Wickelrolle kommt. Entsprechend wirken keine Reibkräfte auf die Wickelrolle ein, die insbesondere bei Verwendung eines folienartigen Wickelmaterials ansonsten leicht zu einer Beschädigung des Wickelmaterials führen können. Ein weiterer Vorteil besteht darin, dass die Überführung der Wickelrolle von ihrer Ladeposition in eine Verwendungsposition an der Rollenhalterung ohne besondere Kraftanstrengung möglich ist, da keine der Bewegung der Wickelrolle entgegenstehenden Reibkräfte überwunden werden müssen. Stattdessen kann die Wickelrolle mittels Lagerung auf dem Laufschlitten besonders reibungsarm entlang der Laufschiene und mithin parallel zu den Tragrollen bewegt und in die Rollenhalterung eingeführt werden.

Gemäss der Erfindung ist die Laufschiene zwischen den Tragrollen der Rollenhalterung angeordnet. Auf diese Weise befindet sich die Wickelrolle nach vollständigem Einfahren in die Rollenhalterung in einer geeigneten Verwendungsposition.

Weiterhin kann es von besonderem Vorteil sein, wenn der Laufschlitten zwischen einer Übernahmestellung, in der er die in ihrer Ladeposition vorliegende Wickelrolle übernehmen kann, und einer Übergabestellung entlang der Laufschiene bewegbar ist, wobei der Laufschlitten mittels Überführung in seine Übergabestellung dazu geeignet ist, die auf ihm gelagerte Wickelrolle an die Rollenhalterung zu übergeben. Hierzu befindet sich der Laufschlitten bei Vorliegen in seiner Übergabestellung auf einem gegenüber der Übernahmestellung abgesenkten Höhenniveau. Dem liegt die Überlegung zugrunde, dass die Wickelrolle im Zuge ihrer Führung entlang der Laufschiene mittels des Laufschlittens derart erhöht gegenüber den Tragrollen gelagert ist, dass die beschriebene Reibung der Wickelrolle an den Tragrollen erfindungsgemäß vermieden ist. Mit anderen Worten befindet sich zwischen der Wickelrolle und den Tragrollen bei Vorliegen des Laufschlittens in dessen Übernahmestellung zumindest ein Spalt. Um die Wickelrolle letztlich an die Tragrollen zu übergeben, muss erstere abgesenkt werden, bis sie auf den Tragrollen aufliegt. Diese Absenkung findet statt, indem der Laufschlitten ausgehend von seiner Übernahmestellung in seine demgegenüber abgesenkte Übergabestellung verfährt, wobei die auf dem Laufschlitten gelagerte Wickelrolle gleichermaßen abgesenkt wird. Im Zuge dieser Absenkung wird die Wickelrolle gewissermaßen automatisch auf den Tragrollen "abgelegt" bzw. an die Tragrollen übergeben.

Zur vorrichtungstechnischen Umsetzung der beschriebenen Absenkbewegung des Laufschlittens im Zuge seiner Überführung zwischen seiner Übernahmestellung und seiner Übergabestellung kann es dabei von besonderem Vorteil sein, wenn die Laufschiene in einem dem Ladearm abgewandten Endbereich einen Absenkabschnitt aufweist. Dieser Absenkabschnitt erstreckt sich unter einem Winkel relativ zu den Rotationsachsen der Tragrollen und dient dazu, den Laufschlitten relativ zu den Tragrollen höhenmäßig zu bewegen. Im Einzelnen dient der Absenkabschnitt folglich dazu, den Laufschlitten ausgehend von seiner Übernahmestellung auf das demgegenüber abgesenkte Höhenniveau der Übergabestellung und umgekehrt zu führen. Der "Absenkabschnitt" kann mithin gewissermaßen in Form einer Rampe entlang der Laufschiene ausgeführt sein.

Um die Wickelrolle im Zuge ihrer Einführung in die Rollenhalterung möglichst lange reibungsfrei, das heißt kontaktlos zu den Tragrollen, führen zu können, befindet sich der Absenkabschnitt vorteilhafterweise in einem Abstand von einem dem Ladearm abgewandten Ende der Laufschiene, der maximal 20 %, vorzugsweise maximal 10 %, einer Gesamtlänge der Laufschiene entspricht. Diese Ausführung hat zur Folge, dass der Laufschlitten erst "am Ende" der Laufschiene in seine Übergabestellung abgesenkt wird und mithin ein reibender Kontakt zwischen dem äußeren Mantel der Wickelrolle und den Tragrollen erst dann stattfindet, wenn die Wickelrolle entweder bereits vollständig oder zumindest fast vollständig an die Rollenhalterung der Zuführeinrichtung übergeben ist. Etwaige zwischen der Wickelrolle und den Tragrollen auftretende Reibungskräfte sind entsprechend auf ein Minimum reduziert.

Außerhalb des Absenkabschnitts kann die Laufschiene insbesondere parallel zu den Rotationsachsen der Tragrollen ausgerichtet sein. Das heißt, dass ein Höhenversatz des Laufschlittens im Zuge seiner Bewegung entlang der Laufschiene außerhalb des Absenkabschnitts nicht stattfindet.

In einer weiterhin vorteilhaften Ausgestaltung der erfindungsgemäßen Rundballenpresse verfügt die Zuführeinrichtung über eine Schwenkeinrichtung, mittels derer die Tragrollen um eine zu ihren Rotationsachsen parallele Schwenkachse verschwenkbar sind. Das heißt, dass sich die Tragrollen im Zuge dieser Verschwenkung translatorisch auf einer Kreisbahn um die Schwenkachse der Schwenkeinrichtung bewegen. Auf diese Weise können die Tragrollen zwischen einer Arbeitsstellung und einer Ladestellung überführt werden. Die Arbeitsstellung beschreibt dabei diejenige Stellung der Tragrollen, bei deren Vorliegen eine auf ihnen gelagerte Wickelrolle bestimmungsgemäß verwendbar ist, das heißt in ihrer Verwendungsposition vorliegt. Insbesondere kann sich die Wickelrolle bei Vorliegen der Tragrollen in ihrer Arbeitsstellung in unmittelbarem Kontakt mit einer Bremsrolle befinden. Die Ladestellung der Tragrollen ist demgegenüber verschwenkt, wobei eine Beladung der Zuführeinrichtung mit einer neuen Wickelrolle bei Vorliegen der Tragrollen in deren Ladestellung stattfindet.

Die Verwendung einer Schwenkeinrichtung bzw. die verschiedenen Stellungen der Tragrollen, die mittels der Schwenkeinrichtung erzeugt werden können, bieten den besonderen Vorteil, dass die Wickelrolle nach ihrer Überführung bzw. Übergabe an die Rollenhalterung noch nicht unmittelbar in ihrer Verwendungsposition vorliegt. Letztere ist in aller Regel dadurch geprägt, dass die jeweilige Wickelrolle sich in unmittelbarem Kontakt mit einer Bremsrolle der Zuführeinrichtung befindet. Dabei versteht es sich, dass nach dem Beladen der Zuführeinrichtung mit einer neuen Wickelrolle zunächst das Wickelmaterial in die Zuführeinrichtung eingepflegt bzw. eingeführt werden muss. Dies beinhaltet auch eine Einführung des Wickelmaterials in einen Führungsspalt zwischen der Wickelrolle und der Bremsrolle. Es versteht sich, dass dieses Einführen besonders beschwerlich ist, wenn die Wickelrolle nach ihrer Übergabe an die Rollenhalterung unmittelbar in Kontakt mit der Bremsrolle steht. Die Ladestellung der Tragrollen, die mittels der Schwenkeinrichtung erzeugbar ist, bietet demgegenüber den Vorteil, dass die Wickelrolle zunächst in einem ausreichenden Abstand von der Bremsrolle gelagert ist, woraufhin das Wickelmaterial besonders einfach an der Zuführeinrichtung einpflegbar ist. Nachdem dies geschehen ist, können die Tragrollen mittels der Schwenkeinrichtung in ihre Arbeitsstellung überführt werden, in der die Wickelrolle sodann bestimmungsgemäß unmittelbar an der Bremsrolle anliegt und demzufolge in ihrer Verwendungsposition vorliegt.

Die erfindungsgemäße Rundballenpresse weiter ausgestaltend ist der Ladearm doppelachsig verschwenkbar gelagert, wobei eine erste Schwenkachse vertikal und die zweite Schwenkachse horizontal orientiert sind. Auf diese Weise kann der Ladearm besonders platzsparend an dem Gehäuse der Rundballenpresse angeordnet werden und gleichwohl eine bequeme Beladung bzw. Ausrichtung der Wickelrolle zwecks Beladung der Zuführeinrichtung ermöglichen.

Weiterhin kann es von Vorteil sein, wenn der Ladearm mindestens eine stationäre Laufrolle, vorzugsweise eine Mehrzahl stationärer Laufrollen, aufweist. Derartige Laufrollen sind um eine jeweilige Rotationsachse drehbar sowie stationär an dem Ladearm gelagert, sodass eine Wickelrolle im Zuge ihrer Übergabe von dem Ladearm an die Rollenhalterung der Zuführeinrichtung besonders reibungsarm an dem Ladearm geführt werden kann.

In verfahrenstechnischer Hinsicht wird die zugrunde liegende Aufgabe erfindungsgemäß mittels des Verfahrens gemäß Anspruch 10 gelöst. Dieses Verfahren ist mittels der erfindungsgemäßen Rundballenpresse besonders einfach ausführbar. Es bietet insbesondere den Vorteil, dass die Wickelrolle im Zuge ihrer Überführung von ihrer Ladeposition in ihre Verwendungsposition berührungsfrei bzw. reibungsfrei zu den Tragrollen bewegt wird. Hieraus ergibt sich ein gegenüber dem Stand der Technik reduziertes Beschädigungsrisiko des auf der Wickelrolle vorgehaltenen Wickelmaterials.

Vorteilhafterweise wird der Laufschlitten im Zuge seiner Bewegung entlang der Laufschiene zwischen einer Übernahmestellung und eine Übergabestellung bewegt, wobei der Laufschlitten im Zuge dieser Überführung relativ zu den Tragrollen betrachtet abgesenkt wird. Die Vorteile dieses Vorgehens sind im Zusammenhang mit der erfindungsgemäßen Rundballenpresse vorstehend bereits dargelegt. Insbesondere ermöglicht die Absenkung des Laufschlittens eine Übergabe der zu ladenden Wickelrolle an die Tragrollen der Zuführeinrichtung erst dann, wenn die Wickelrolle bereits zumindest im Wesentlichen vollständig in der Rollenhalterung angeordnet ist.

Das erfindungsgemäße Verfahren weiter ausgestaltend werden die Tragrollen vor der Übernahme einer neuen Wickelrolle mittels einer Schwenkeinrichtung ausgehend von einer Arbeitsstellung in eine Ladestellung überführt. Im Zuge dieser Überführung werden die Tragrollen von einer Bremsrolle der Zuführeinrichtung weg bewegt. Dies hat gemäß vorstehender Erläuterung den Vorteil, dass die Wickelrolle nach ihrer Übergabe an die Rollenhalterung der Zuführeinrichtung nicht unmittelbar an der Bremsrolle anliegt und mithin eine im Vergleich zum Stand der Technik besonders einfache Einführung des Wickelmaterials zwischen der Wickelrolle und der Bremsrolle ermöglicht ist. Erst mittels sich daran anschließender Überführung der Tragrollen ausgehend von ihrer Ladestellung in ihre Arbeitsstellung wird die neue Wickelrolle sodann in zumindest nahezu unmittelbaren Kontakt mit der Bremsrolle gebracht.

Die erfindungsgemäße Rundballenpresse sowie das erfindungsgemäße Verfahren werden nachstehend anhand eines Ausführungsbeispiels, das in den Figuren dargestellt ist, näher erläutert. Es zeigt:
- Fig. 1:: Einen Querschnitt durch eine Zuführeinrichtung einer erfindungsgemäßen Rundballenpresse,
- Fig. 2:: Eine Seitenansicht einer erfindungsgemäßen Rundballenpresse, die eine Zuführeinrichtung gemäß Figur 1 umfasst,
- Fig. 3:: Eine isometrische Ansicht der Rundballenpresse gemäß Figur 3,
- Fig. 4:: Eine isometrische Ansicht der Zuführeinrichtung gemäß Figur 1 im Moment einer Beladung einer Rollenhalterung der Zuführeinrichtung mit einer neuen Wickelrolle,
- Fig. 5:: eine isometrische Ansicht der Zuführeinrichtung gemäß Figur 1, wobei die Wickelrolle mit einem Ende auf einem Laufschlitten gelagert ist,
- Fig. 6:: Eine Frontansicht der Zuführeinrichtung gemäß Figur 1, wobei sich die Wickelrolle in einer Verwendungsposition befindet,
- Fig. 7a - 7c:: Ein Querschnitt durch eine Wickelrolle im Zuge ihrer Übergabe an die Zuführeinrichtung,
- Fig. 8:: Einen Querschnitt durch die Zuführeinrichtung gemäß Figur 1, wobei eine Schwenkeinrichtung zwischen einer Arbeitsstellung und einer Ladestellung überführt wird, und
- Fig. 9:: Einen Querschnitt durch die Zuführeinrichtung gemäß Figur 7, wobei sich die Schwenkeinrichtung in ihrer Ladestellung befindet.

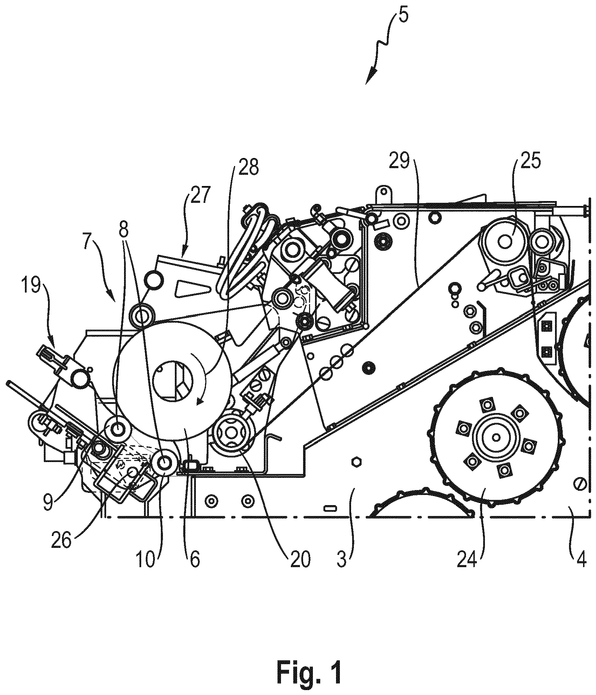

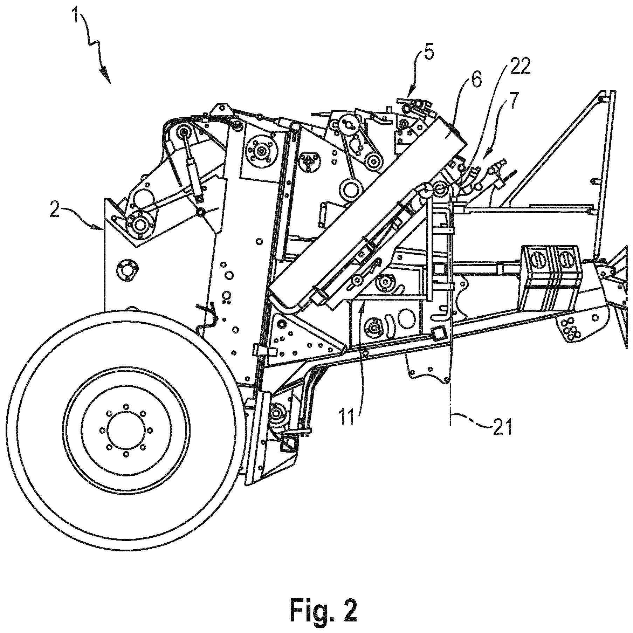

Ein Ausführungsbeispiel, das in den **Figuren 1 bis 9** dargestellt ist, umfasst eine erfindungsgemäße Rundballenpresse **1,** die sich in einer seitlichen Ansicht aus **Figur 2** ergibt. Diese Rundballenpresse **1** umfasst ein Gehäuse **2,** das einen Innenraum **3** begrenzt. Innerhalb dieses Innenraums **3** befindet sich eine von einer Vielzahl von Profilwalzen **24** begrenzte Presskammer **4,** innerhalb derer ein jeweiliges Erntegut zu einem Rundballen pressbar ist. Die Presskammer **4** ist hier mit einem festen Querschnitt ausgebildet. Bei der Rundballenpresse **1** handelt es sich in dem gezeigten Beispiel mithin um eine sogenannte Festkammerpresse. Dabei versteht es sich, dass sich die Erfindung nicht auf solche Rundballenpressen beschränkt, sondern ebenso solche mit umfasst sind, deren Presskammer einen variabel Querschnitt aufweist.

An einer oberen Seite des Gehäuses **2** ist die erfindungsgemäße Rundballenpresse **1** mit einer Zuführeinrichtung **5** versehen. Dies ist besonders gut anhand von **Figur 2** erkennbar. Die Zuführeinrichtung **5** als solche ergibt sich insbesondere mit ihren einzelnen Komponenten aus **Figur 1****.** Die Zuführeinrichtung **5** dient dazu, auf einer Wickelrolle **6** vorgehaltenes Wickelmaterial **29** der Presskammer **4** zuzuführen, sodass ein fertiggestellter Rundballen mit dem Wickelmaterial **29** eingewickelt bzw. eingefasst werden kann. Hierzu verfügt die Zuführeinrichtung **5** über eine Rollenhalterung **7,** mittels derer eine Wickelrolle **6** lagerbar ist. Die Rollenhalterung **7** weist in dem gezeigten Beispiel insgesamt drei Tragrollen **9, 10, 20** auf, wobei eine der Tragrollen in Form einer Bremsrolle **20** ausgebildet ist. Die Funktion einer solchen Bremsrolle **20** ist vorstehend bereits dargelegt. Die übrigen beiden Tragrollen **9, 10** sind jeweils frei um ihre jeweilige Rotationsachse **8** drehbar gelagert, sodass die Wickelrolle **6** frei innerhalb der Rollenhalterung **7** um ihre Längsachse rotierbar ist.

In dem gezeigten Beispiel ist die Rollenhalterung **7** derart ausgebildet, dass bei Vorliegen der Wickelrolle **6** in einer Verwendungsposition, in der das auf der Wickelrolle **6** vorgehaltene Wickelmaterial **29** von ihr abziehbar ist, mittels der Tragrolle **9** und der Bremsrolle **20** gelagert ist, während die dritte Tragrolle **10** funktionslos ist. Dieser Zustand ist besonders gut anhand von **Figur 1** erkennbar. Hieraus ergibt sich, dass die Bremsrolle **20** neben ihrer Bremsfunktion gleichzeitig in Funktion einer Tragrolle wirkt. Grundsätzlich ist es ebenso denkbar, dass eine jeweilige Wickelrolle mittels sämtlicher Tragrollen gelagert ist, wobei eine jeweilige Bremsrolle lediglich die gewünschte Bremsfunktion erfüllt, während die Wickelrolle als solche mittels dezidierter Tragrollen gelagert ist.

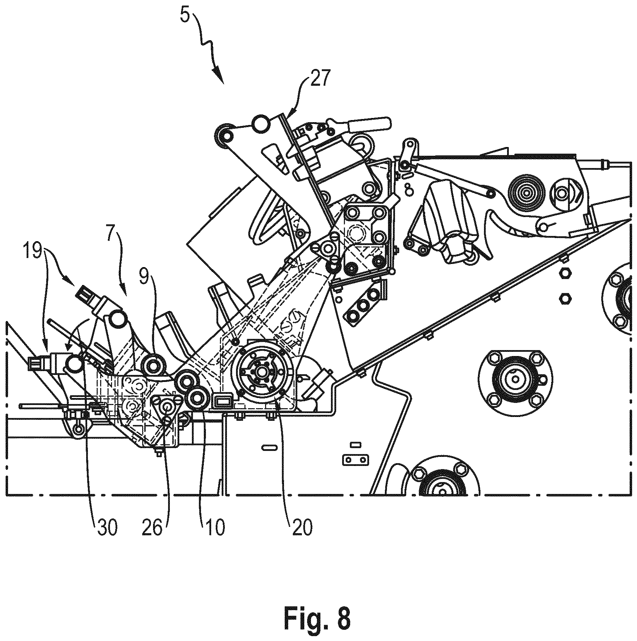

Um die Wickelrolle **6** bei Vorliegen in ihrer Verwendungsposition nach oben hin zu fixieren, umfasst die Zuführeinrichtung **5** ferner einen Niederhalter **27,** der mit einer zugeordneten Führungsrolle in einem oberen Bereich der Wickelrolle **6** wirkt. Weiterhin wirkt die Zuführeinrichtung **5** mit einer Schwenkeinrichtung **19** zusammen, mittels derer die Tragrollen **9, 10** verschwenkbar sind. Hierzu ist die Schwenkeinrichtung **19** um eine Schwenkachse **26** relativ zu der übrigen Zuführeinrichtung **5** verschwenkbar angeordnet. Diese Schwenkachse **26** ist parallel zu den Rotationsachse **8** der Tragrollen **9, 10** orientiert, sodass eine Verschwenkung der Schwenkeinrichtung **19** zu einer translatorischen Bewegung der Tragrollen **9, 10** auf einer Kreisbahn um die Schwenkachse **26** führt. Diese Bewegung der Schwenkeinrichtung **19** ist besonders gut anhand von **Figur 8** nachvollziehbar.

Ausgehend von der Rollenhalterung **7** wird in einem Betrieb der Zuführeinrichtung **5** das Wickelmaterial **29** von der Wickelrolle **6** abgewickelt, wobei sich die Wickelrolle **6** in eine Rotationsrichtung **28** um ihre Längsachse dreht. Für das Abziehen des Wickelmaterials **29** von der Wickelrolle **6** ist eine Zuführrolle **25** der Zuführeinrichtung **5** verantwortlich, die drehantreibbar an der Zuführeinrichtung **5** angeordnet ist. Das Wickelmaterial **29** wird schließlich ausgehend von der Zuführrolle **25** der Presskammer **4** zugeführt.

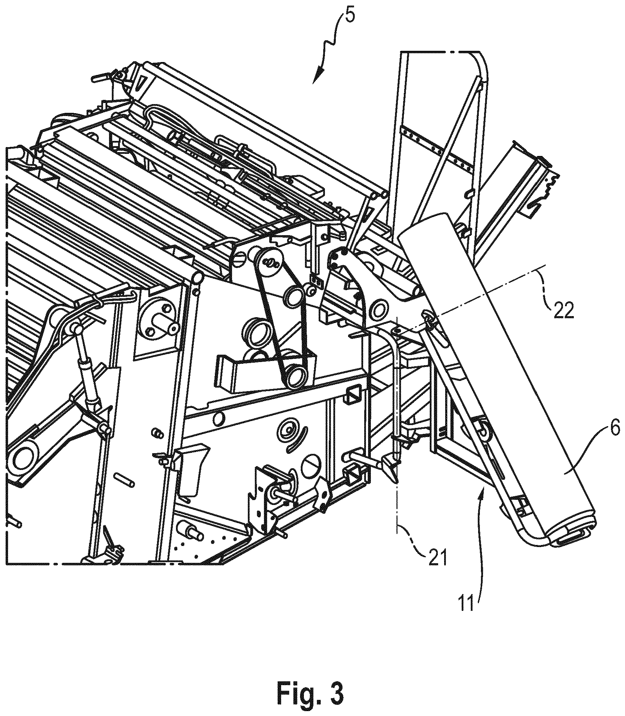

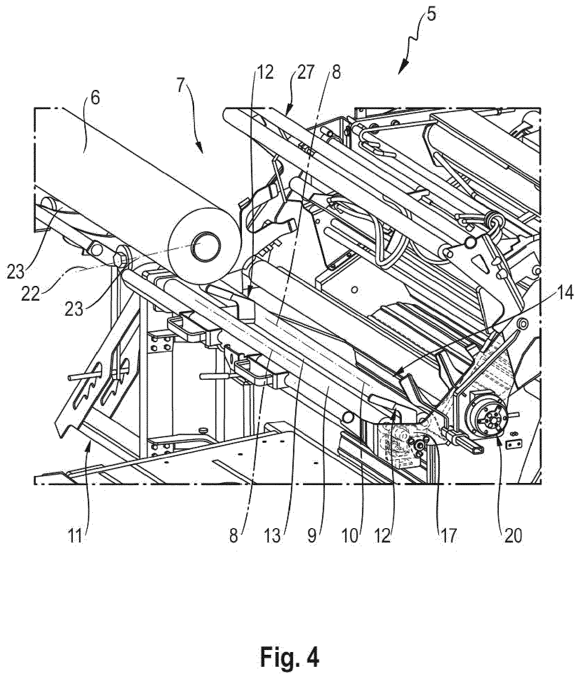

In einem Betrieb der Rundballenpresse **1** ist das gesamte Wickelmaterial **29** einer Wickelrolle **6** früher oder später verbraucht, sodass die jeweilige Wickelrolle **6** gegen eine neue Wickelrolle **6** ausgetauscht werden muss. Hierzu verfügt die Zuführeinrichtung **5** über einen Ladearm **11,** der seitlich an dem Gehäuse **2** der Rundballenpresse **1** angeordnet ist. Dieser Ladearm **11** ist in einer Ausgangsstellung seitlich an das Gehäuse **2** angelegt, sodass ein Raumbedarf des Ladearms **11** möglichst gering ist. Der Ladearm **11** verfügt über eine Rollenhalterung, mittels derer eine neue Wickelrolle **6** an dem Ladearm **11** haltbar ist. Um diese neue Wickelrolle **6** nunmehr der Zuführeinrichtung **5** bzw. der Rollenhalterung **7** zuzuführen, ist der Ladearm **11** es doppelachsig verschwenkbar. Hierzu wird er zunächst um eine vertikale Schwenkachse **21** verschwenkt. Eine sich daraufhin einstellende Stellung des Ladearms **11** ist besonders gut anhand von **Figur 3** erkennbar. Ausgehend von dieser Stellung wird der Ladearm **11** um eine horizontale Schwenkachse **22** verschwenkt, sodass die Wickelrolle **6** in eine zumindest im Wesentlichen horizontale Stellung überführt wird. Diese ist besonders gut aus **Figur 4** ersichtlich. Dort ist die Wickelrolle **6** in einer Ladeposition gezeigt, in der sie sich parallel zu den Rotationsachsen **8** der Tragrollen **9, 10** erstreckt sowie im Wesentlichen auf dem Höhenniveau der Rollenhalterung **7** angeordnet ist. Das heißt, dass die Wickelrolle **6** sich auf einem Höhenniveau befindet, das sich leicht oberhalb der Tragrollen **9, 10** befindet, sodass die Wickelrolle **6** sich im Zuge ihrer Übergabe an die Rollenhalterung **7** gewissermaßen unmittelbar auf die Tragrollen **9, 10** legen kann.

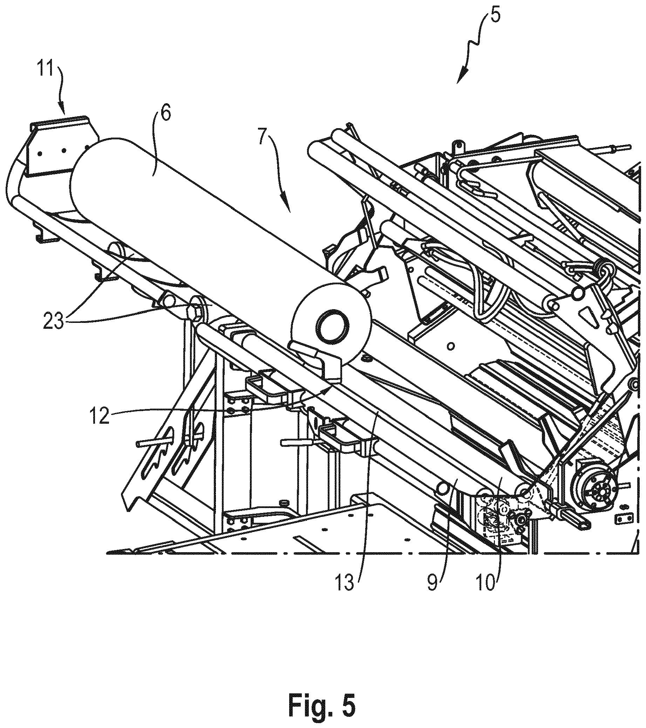

In der in **Figur 4** dargestellten Ladeposition der Wickelrolle **6** liegt diese noch vollständig auf dem Ladearm **11** auf. Dabei ist die Wickelrolle **6** auf Laufrollen **23** gelagert, die stationär an dem Ladearm **11** angeordnet sind und jeweils um ihre Rotationsachse rotierbar sind. Auf diese Weise ist es möglich, die Wickelrolle **6** relativ zu dem Ladearm **11** zu bewegen, ohne dass es zu der Einwirkung von Reibkräften auf die äußere Mantelfläche der Wickelrolle **6** kommt. Ausgehend von der Ladeposition wird die Wickelrolle **6** im Zuge ihrer Übergabe an die Rollenhalterung **7** der Zuführeinrichtung **5** zunächst ein Stück weit parallel zu ihrer Längsachse in Richtung der Zuführeinrichtung **5** bewegt. Diese Bewegung wird so weit vorgenommen, bis die Wickelrolle **6** mit einem dem Ladearm **11** abgewandten Ende auf einem Laufschlitten **12** abgelegt werden kann. Diese Situation ist besonders gut anhand von **Figur 5** erkennbar. Der Laufschlitten **12** ist seinerseits in einer sich parallel zu den Tragrollen **9, 10** erstreckenden Laufschiene **13** beweglich gelagert. Hierzu verfügt der Laufschlitten **12** an einer Unterseite über Laufräder, mit denen der Laufschlitten **12** entlang der Laufschiene **13** verfahrbar ist.

Erfindungsgemäß wird die Wickelrolle **6** nach ihrem Auflegen auf den Laufschlitten **12** sowie unter Verwendung desselben kontaktlos zu den Tragrollen **9, 10** an die Rollenhalterung **7** übergeben. Dabei befindet sich der Laufschlitten **12** auf einem Höhenniveau, dass derart relativ zu den Tragrollen **9, 10** angeordnet ist, dass die Wickelrolle **6** im Zuge ihrer Führung mittels des Laufschlittens **12** entlang der Laufschiene **13** keinen Kontakt mit den Tragrollen **9, 10** hat. Dies hat zur Folge, dass die Führung der Wickelrolle **6** ohne Einwirkung von Reibungskräften auf ihre äußere Mantelfläche vonstattengehen kann. Hierin ist gegenüber dem Stand der Technik der besondere Vorteil zu sehen, da aufgrund der Vermeidung besagter Reibungskräfte gleichermaßen eine Beschädigung des auf der Wickelrolle **6** vorgehaltenen Wickelmaterials **29** vermieden ist.

Es versteht sich, dass die Wickelrolle **6** nach ihrer Übergabe an die Rollenhalterung **7** schließlich in einer Verwendungsposition vorliegen muss, in der sie auf den Tragrollen **9, 10** (bzw. zumindest einer Tragrolle **9** und der Bremsrolle **20**) aufliegt. Entsprechend ist es erforderlich, dass die Wickelrolle **6** ausgehend von dem vorstehend beschriebenen, erhöhten Höhenniveau, das durch den Laufschlitten **12** bedingt ist, abgesenkt wird. Dies erfolgt hier dadurch, dass die Laufschiene **13** einen Absenkabschnitt **15** umfasst, der in einem dem Ladearm **11** abgewandten Endbereich **14** der Laufschiene **13** angeordnet ist. Im Einzelnen befindet sich der Absenkabschnitt **15** in einem Abstand **16** von einem dem Ladearm **11** abgewandten Ende **17** der Laufschiene **13.** Dieser Abstand **16** wird hier ausgehend von besagtem Ende **17** bis zu einer Mitte des Absenkabschnitts **15** gemessen. Er beträgt in dem gezeigten Beispiel ca. 10 % einer Gesamtlänge **18** der Laufschiene **13.**

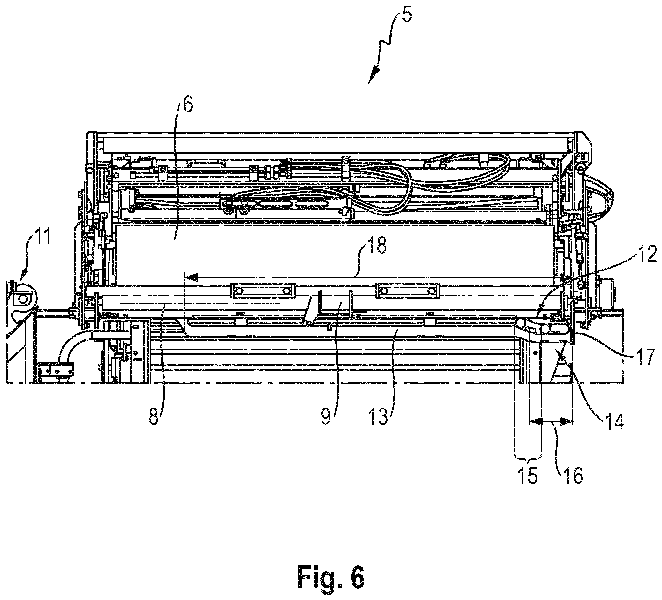

Der Absenkabschnitt **15** ist gewissermaßen in Form einer Rampe ausgeführt, die im Übrigen parallel zu den Rotationsachsen **8** der Tragrollen **9, 10** orientierte Laufschienenabschnitte miteinander verbindet. Diese Laufschienenabschnitte befinden sich auf unterschiedlichen Höhenniveaus, die mittels des Absenkabschnitts **15** überbrückt werden. Eine entsprechende Frontansicht der Zuführeinrichtung **5,** aus der sich diese Ausgestaltung der Laufschiene **13** besonders gut ergibt, ist in **Figur 6** erkennbar. Der Absenkabschnitt **15** hat zur Folge, dass der Laufschlitten **12** im Zuge seiner Führung entlang der Laufschiene **13** an Höhe verliert, wodurch selbstverständlich auch die auf dem Laufschlitten gelagerte Wickelrolle **6** abgesenkt wird. Die Höhendifferenz zwischen dem "oberen Laufschienenabschnitt" und dem "unteren Laufschienenabschnitt", die mittels des Absenkabschnitts **15** überbrückt wird, ist dabei derart gewählt, dass die Wickelrolle **6** im Zuge der Überführung des Laufschlittens **12** in den unteren Laufschienenabschnitt in unmittelbaren Kontakt mit den Tragrollen **9, 10** kommt. Mit anderen Worten wird die Wickelrolle **6** gewissermaßen im Zuge der Führung des Laufschlittens **12** entlang der Laufschiene **13** auf den Tragrollen **9, 10** abgelegt. Dies ergibt sich beispielhaft aus **Figur 6****.**

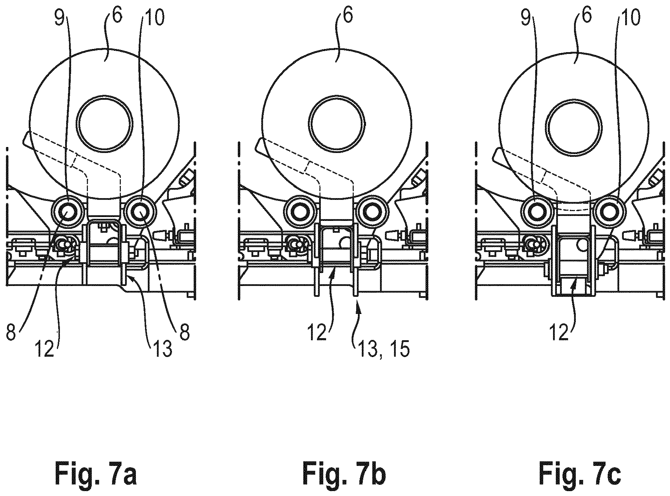

Die Bewegung des Laufschlittens **12** entlang der Laufschiene **13** ist in ihren einzelnen Phasen, das heißt entlang des oberen Laufschienenabschnitts, entlang des Absenkabschnitts **15** sowie entlang des unteren Laufschienenabschnitts in den **Figuren 7a bis 7c** veranschaulicht. Daraus ergibt sich auch ohne Weiteres die beschriebene Führung der Wickelrolle **6** in einem vertikalen Abstand zu den Tragrollen **9, 10** sowie die Ablegung der Wickelrolle **6** auf den besagten Tragrollen **9, 10.**

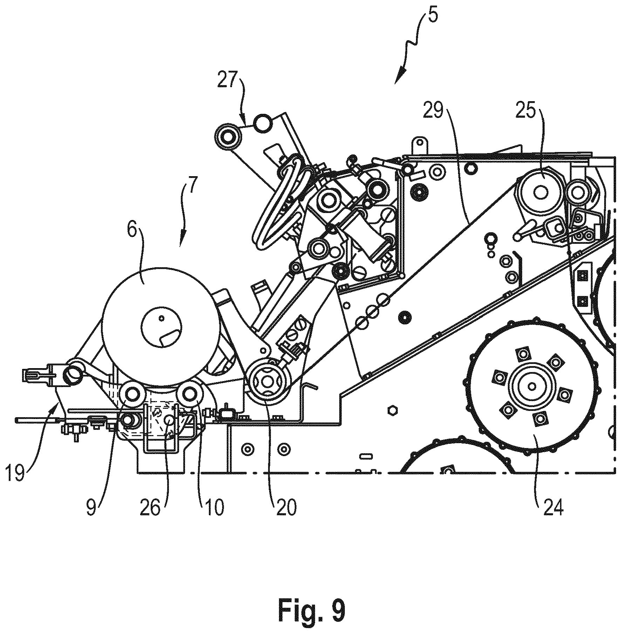

Ergänzend zu der beschriebenen Funktionalität der "reibungsfreien" Einführung der neuen Wickelrolle **6** in die Rollenhalterung **7** verfügt die Zuführeinrichtung **5** über die bereits vorstehend beschriebene Schwenkeinrichtung **19.** Diese bietet den besonderen Vorteil, dass die Wickelrolle **6** nach ihrer Aufnahme in der Rollenhalterung **7** zunächst in einer Zwischenposition lagerbar ist, in der ein äußerer Mantel der Wickelrolle **6** beabstandet zu einer äußeren Mantelfläche der Bremsrolle **20** angeordnet ist. Dies ist insoweit von Vorteil, als das Wickelmaterial **29,** das auf der Wickelrolle **6** vorgehalten wird, vor Inbetriebnahme der Wickelrolle **6** zunächst in die Zuführeinrichtung **5** eingepflegt werden muss. Hierfür muss das Wickelmaterial **29** zunächst entlang der Bremsrolle **20** und sodann zu der Zuführrolle **25** geführt werden. Dies ist besonders gut anhand von **Figur 9** erkennbar. Dabei versteht es sich, dass diese Einpflege des Wickelmaterials **29** besonders beschwerlich ist, wenn die Wickelrolle **6** nach ihrer Überführung in die Rollenhalterung **7** unmittelbar an der Bremsrolle **20** anliegt. Entsprechend ist es von Vorteil, dass die Tragrollen **9, 10** zusätzlich zu ihrer Arbeitsstellung mittels der Schwenkeinrichtungen **19** in eine Ladestellung bringbar sind. Hierzu wird die Schwenkeinrichtungen **19** mittels einer Schwenkbewegung **30** um eine zugehörige Schwenkachse **26** verschwenkt. Dies ergibt sich besonders gut anhand der Darstellung gemäß **Figur 8****.** In der unteren Ladestellung sind die Tragrollen **9, 10** derart von der Bremsrolle **20** beabstandet, dass die auf die Tragrollen 9, **10** überführte Wickelrolle **6** zunächst in einem Abstand von der Bremsrolle **20** vorliegt **(****Figur 9****).** Erst nachdem das Wickelmaterial **29** entsprechend verarbeitet wurde, werden schließlich die Tragrollen **9, 10** wieder zurück in ihrer Arbeitsstellung überführt, woraufhin die Wickelrolle **6** unmittelbar mit der Bremsrolle **20** in Kontakt steht. Eine entsprechende Situation ist in **Figur 1** gezeigt.

Die Schwenkeinrichtungen **19** vereinfacht mithin die Beladung der Zuführeinrichtung **5** mit einer neuen Wickelrolle **6,** wodurch zum einen die Arbeit für einen jeweiligen Maschinenführer erleichtert und zum anderen die Stillstandzeit der Rundballenpresse **1** verkürzt wird.

### Bezugszeichenliste

- 1: Rundballenpresse
- 2: Gehäuse
- 3: Innenraum
- 4: Presskammer
- 5: Zuführeinrichtung
- 6: Wickelrolle
- 7: Rollenhalterung
- 8: Rotationsachse
- 9: Tragrolle
- 10: Tragrolle
- 11: Ladearm
- 12: Laufschlitten
- 13: Laufschiene
- 14: Endbereich
- 15: Absenkabschnitt
- 16: Abstand
- 17: Ende
- 18: Gesamtlänge
- 19: Schwenkeinrichtung
- 20: Bremsrolle
- 21: Schwenkachse
- 22: Schwenkachse
- 23: Laufrolle
- 24: Profilwalze
- 25: Zuführrolle
- 26: Schwenkachse
- 27: Niederhalter
- 28: Rotationsrichtung
- 29: Wickelmaterial
- 30: Schwenkbewegung

## Patentansprüche

1. Landwirtschaftliche Rundballenpresse (1) zur Herstellung von aus Erntegut gepressten Rundballen, umfassend
- mindestens ein Gehäuse (2), das einen Innenraum (3) der Rundballenpresse (1) begrenzt,
- mindestens eine innerhalb des Innenraums (3) angeordnete Presskammer (4), mittels derer zugeführtes Erntegut zu einem Rundballen pressbar ist,
- mindestens eine Zuführeinrichtung (5), mittels derer der Presskammer (4) ein von einer Wickelrolle (6) abziehbares Wickelmaterial (29) zur Einwickelung eines gepressten Rundballens zuführbar ist,
wobei die Zuführeinrichtung (5) mindestens eine Rollenhalterung (7) aufweist, die mindestens zwei langgestreckte, parallel zueinander orientierte und um ihre jeweilige Rotationsachse (8) verdrehbare Tragrollen (9, 10) umfasst,
wobei die Zuführeinrichtung (5) mindestens einen Ladearm (11) umfasst, mittels dessen eine zu ladende Wickelrolle (6) in eine Ladeposition überführbar ist, in der die Wickelrolle (6) zumindest im Wesentlichen parallel zu den Tragrollen (9, 10) ausgerichtet sowie zumindest im Wesentlichen auf einem Höhenniveau der Rollenhalterung (7) angeordnet ist,
**dadurch gekennzeichnet, dass**
die Zuführeinrichtung (5) mindestens einen Laufschlitten (12) aufweist, der entlang einer sich parallel zu den Tragrollen (9, 10) erstreckenden Laufschiene (13) der Zuführeinrichtung (5) bewegbar ist,
wobei der Laufschlitten (12) dazu geeignet ist, eine Wickelrolle (6) ausgehend von ihrer Ladeposition zumindest teilweise von dem Ladearm (11) zu übernehmen, sodass die Wickelrolle (6) sodann mittels des Laufschlittens (12) entlang der Laufschiene (13) führbar ist, wobei die Laufschiene (13) zwischen den Tragrollen (9, 10) der Rollenhalterung (7) verläuft.

2. Rundballenpresse (1) nach Anspruch 1, **dadurch gekennzeichnet, dass** der Laufschlitten (12) zwischen einer Übernahmestellung und einer Übergabestellung entlang der Laufschiene (13) bewegbar ist, wobei sich der Laufschlitten (12) bei Vorliegen in seiner Übernahmestellung gegenüber einem Vorliegen in seiner Übergabestellung auf einem erhöhten Höhenniveau befindet.

3. Rundballenpresse (1) nach Anspruch 2, **dadurch gekennzeichnet, dass** die Laufschiene (13) in einem dem Ladearm (11) abgewandten Endbereich (14) einen Absenkabschnitt (15) aufweist, mittels dessen der Laufschlitten (12) ausgehend von seinem Höhenniveau bei Vorliegen in seiner Übergabestellung auf sein Höhenniveau bei Vorliegen in seiner Übernahmestellung oder umgekehrt überführbar ist, wobei vorzugsweise ein Abstand (16) des Absenkabschnitts (15) von einem dem Ladearm (11) abgewandten Ende (17) der Laufschiene (13) maximal 20 %, weiter vorzugsweise maximal 10 %, einer Gesamtlänge (18) der Laufschiene (13) entspricht.

4. Rundballenpresse (1) nach Anspruch 3, **dadurch gekennzeichnet, dass** die Laufschiene (13) außerhalb des Absenkabschnitts (15) parallel zu den Rotationsachsen (8) der Tragrollen (9, 10) ausgerichtet ist.

5. Rundballenpresse (1) nach einem der Ansprüche 1 bis 4, **gekennzeichnet durch** eine Schwenkeinrichtung (19), mittels derer die Tragrollen (9, 10) ausgehend von einer Arbeitsstellung in eine Ladestellung überführbar sind, sodass eine auf den Tragrollen (9, 10) gelagerte Wickelrolle (6) mittels der Schwenkeinrichtung (19) translatorisch bewegbar ist.

6. Rundballenpresse (1) nach Anspruch 5, **dadurch gekennzeichnet, dass** die Tragrollen (9, 10) bei Vorliegen in ihrer Ladestellung derart relativ zu einer Bremsrolle (20) der Zuführeinrichtung (1) angeordnet sind, dass eine auf den Tragrollen (9, 10) gelagerte Wickelrolle (6) berührungsfrei zu der Bremsrolle (20) gelagert ist.

7. Rundballenpresse (1) nach einem der Ansprüche 1 bis 6, **dadurch gekennzeichnet, dass** der Ladearm (11) doppelachsig verschwenkbar gelagert ist, wobei eine erste Schwenkachse (21) vertikal und die zweite Schwenkachse (22) horizontal orientiert sind.

8. Rundballenpresse (1) nach einem der Ansprüche 1 bis 7, **dadurch gekennzeichnet, dass** der Ladearm (11) mindestens eine stationäre Laufrolle (23), vorzugsweise eine Mehrzahl stationärer Laufrollen (23), aufweist, mittels derer eine Wickelrolle (6) im Zuge einer Übergabe an die Rollenhalterung (7) rollbar gelagert ist.

9. Verfahren zur Ladung einer Zuführeinrichtung (5) einer Rundballenpresse (1) mit einer neuen Wickelrolle (6), umfassend die folgenden Verfahrensschritte:
a) Die Wickelrolle (6) wird an einen Ladearm (11) übergeben, mittels dessen die Wickelrolle (6) in eine Ladeposition überführt wird, wobei die Wickelrolle (6) bei Vorliegen in ihrer Ladeposition zumindest im Wesentlichen parallel zu Tragrollen (9, 10) einer Rollenhalterung (7) der Zuführeinrichtung (5) orientiert sowie zumindest im Wesentlichen auf einem Höhenniveau der Rollenhalterung (7) angeordnet ist.
b) Die Wickelrolle (6) wird ausgehend von dem Ladearm (11) an die Rollenhalterung (7) übergeben, sodass auf der Wickelrolle (6) vorgehaltenes Wickelmaterial (29) mittels der Zuführeinrichtung (5) verarbeitbar ist,
**gekennzeichnet durch** den folgenden Verfahrensschritt:
c) Die Wickelrolle (6) wird ausgehend von ihrer Ladeposition mittels eines in einer Laufschiene (13) gelagerten Laufschlittens (12) der Zuführeinrichtung (5) zumindest teilweise übernommen.
d) Die Wickelrolle (6) wird mittels des Laufschlittens (12) parallel zu den Tragrollen (9, 10) sowie berührungsfrei zu den Tragrollen (9, 10) bewegt.

10. Verfahren nach Anspruch 9, **dadurch gekennzeichnet, dass** der Laufschlitten (12) zwischen einer Übernahmestellung und einer Übergabestellung bewegt wird, wobei der Laufschlitten (12) im Zuge seiner Überführung von seiner Übernahmestellung in seiner Übergabestellung relativ zu den Tragrollen (9, 10) betrachtet abgesenkt wird, sodass sich die Wickelrolle (6) bei Vorliegen des Laufschlittens (12) in seiner Übergabestellung in Kontakt mit den Tragrollen (9, 10) befindet.

11. Verfahren nach Anspruch 9 oder 10, **dadurch gekennzeichnet, dass** die Tragrollen (9, 10) vor der Übernahme einer neuen Wickelrolle (6) mittels einer Schwenkeinrichtung (19) ausgehend von einer Arbeitsstellung in eine Ladestellung überführt werden, wobei die Tragrollen (9, 10) im Zuge ihrer Überführung von der Arbeitsstellung in die Ladestellung von einer Bremsrolle (20) der Zuführeinrichtung (5) weg bewegt werden.

12. Verfahren nach Anspruch 11, **dadurch gekennzeichnet, dass** auf der Wickelrolle (6) vorgehaltenes Wickelmaterial (29) in die Zuführeinrichtung (5) eingepflegt wird, bevor die Tragrollen (9, 10) mittels der Schwenkeinrichtung (19) in ihre Arbeitsstellung überführt werden, wobei die Wickelrolle (6) bei Vorliegen der Tragrollen (9, 10) in ihrer Arbeitsstellung in unmittelbarem Kontakt mit der Bremsrolle (20) steht.

## Claims

1. An agricultural round bale press (1) for producing round bales pressed from crop material, including
- at least one housing (2) delimiting an internal space (3) of the round bale press (1),
- at least one pressing chamber (4) which is arranged within the internal space (3) and by means of which fed crop material can be pressed to form a round bale,
- at least one feed device (5), by means of which a wrapping material (29) which can be pulled off a wrapping roll (6) can be fed to the pressing chamber (4) for wrapping a pressed round bale,
wherein the feed device (5) has at least one roller holder (7) including at least two elongate support rollers (9, 10) which are oriented parallel to each other and are rotatable about their respective axis of rotation (8),
wherein the feed device (5) includes at least one loading arm (11), by means of which a wrapping roll (6) to be loaded can be transferred into a loading position in which the wrapping roll (6) is oriented at least substantially parallel to the support rollers (9, 10) and is arranged at least substantially at a heightwise level of the roller holder (7),
**characterised in that**
the feed device (5) has at least one carriage (12) which is moveable along a guide rail (13) of the feed device (5), that extends parallel to the support rollers (9, 10),
wherein the carriage (12) is suitable for at least partially taking over from the loading arm (11) a wrapping roll (6) starting from its loading position, so that the wrapping roll (6) can then be guided by means of the carriage (12) along the guide rail (13), the guide rail (13) extending between the support rollers (9, 10) of the roller holder (7).

2. A round bale press (1) according to claim 1 **characterised in that** the carriage (12) is moveable along the guide rail (13) between a take-over position and a delivery transfer position, wherein the carriage (12) when in its take-over position is at an elevated heightwise level with respect to being in its delivery transfer position.

3. A round bale press (1) according to claim 2 **characterised in that** in an end region (14) remote from the loading arm (11) the guide rail (13) has a lowering portion (15), by means of which the carriage (12) starting from its heightwise level when in its delivery transfer position can be transferred to its heightwise level when in its take-over position or vice-versa, wherein preferably a spacing (16) of the lowering portion (15) from an end (17) of the guide rail (13), that is remote from the loading arm (11), corresponds to a maximum of 20% and further preferably a maximum of 10% of an overall length (18) of the guide rail (13).

4. A round bale press (1) according to claim 3 **characterised in that** the guide rail (13) is oriented outside the lowering portion (15) parallel to the axes (8) of rotation of the support rollers (9, 10).

5. A round bale press (1) according to one of claims 1 to 4 **characterised by** a pivoting device (19), by means of which the support rollers (9, 10) can be transferred from a working position into a loading position so that a wrapping roll (6) mounted on the support rollers (9, 10) is moveable with a translation movement by means of the pivoting device (19).

6. A round bale press (1) according to claim 5 **characterised in that** when in the loading position thereof the support rollers (9, 10) are arranged relative to a braking roller (20) of the feed device (1) in such a way that a wrapping roll (6) mounted on the support rollers (9, 10) is mounted in contact-free relationship with the braking roller (20).

7. A round bale press (1) according to one of claims 1 to 6 **characterised in that** the loading arm (11) is mounted pivotably in double-axis fashion, wherein a first pivot axis (21) is oriented vertically and the second pivot axis (22) is oriented horizontally.

8. A round bale press (1) according to one of claims 1 to 7 **characterised in that** the loading arm (11) has at least one stationary roller (23), preferably a plurality of stationary rollers (23), by means of which a wrapping roll (6) is mounted rollably in the course of its delivery transfer to the roller holder (7).

9. A method of loading a feed device (5) of a round bale press (1) with a fresh wrapping roll (6) including the following method steps:
a) the wrapping roll (6) is transferred to a loading arm (11), by means of which the wrapping roll (6) is transferred into a loading position, wherein when in its loading position the wrapping roll (6) is oriented at least substantially parallel to support rollers (9, 10) of a roller holder (7) of the feed device (5) and is arranged at least substantially at a heightwise level of the roller holder (7),
b) the wrapping roll (6) is transferred from the loading arm (11) to the roller holder (7) so that wrapping material (29) stored on the wrapping roll (6) can be processed by means of the feed device (5),
**characterised by** the following method step:
c) the wrapping roll (6) is at least partially taken over from its loading position by means of a carriage (12) of the feed device (5), that is mounted in a guide rail (13), and
d) the wrapping roll (6) is moved by means of the carriage (12) parallel to the support rollers (9, 10) and in contact-free relationship with the support rollers (9, 10).

10. A method according to claim 9 **characterised in that** the carriage (12) is moved between a take-over position and a delivery transfer position, wherein the carriage (12) in the course of its transfer from its take-over position is lowered considered in its delivery transfer position relative to the support rollers (9, 10) so that when the carriage (12) is in its delivery transfer position the wrapping roll (6) is in contact with the support rollers (9, 10).

11. A method according to claim 9 or claim 10 **characterised in that** the support rollers (9, 10) prior to taking over a fresh wrapping roll (6) are transferred by means of a pivoting device (19) from a working position into a loading position, wherein the support rollers (9, 10) in the course of the transfer thereof from the working position into the loading position are moved away from a braking roller (20) of the feed device (5).

12. A method according to claim 11 **characterised in that** wrapping material (29) stored on the wrapping roll (6) is fed into the feed device (5) before the support rollers (9, 10) are transferred by means of the pivoting device (19) into the working position thereof, wherein the wrapping roll (6) when the support rollers (9, 10) are in their working position is in direct contact with the braking roller (20).

## Revendications

1. Presse agricole à balles rondes (1) pour fabriquer des balles rondes pressées à partir de produit récolté, incluant
- au moins un carter (2) qui limite un espace intérieur (3) de la presse à balles rondes (1),
- au moins une chambre de pressage (4) qui est disposée à l'intérieur de l'espace intérieur (3) et au moyen de laquelle du produit récolté amené peut être pressé sous la forme d'une balle ronde,
- au moins un équipement d'amenée (5) au moyen duquel un matériau d'enrubannage (29) déroulable à partir d'un rouleau d'enrubannage (6) peut être amené à la chambre de pressage (4) pour enrubanner une balle ronde pressée,
l'équipement d'amenée (5) comportant au moins un support de rouleau (7) qui inclut au moins deux rouleaux porteurs (9, 10) allongés, orientés parallèlement l'un à l'autre et montés tournants autour de leur axe de rotation respectif (8),
l'équipement d'amenée (5) incluant au moins un bras de chargement (11) au moyen duquel un rouleau d'enrubannage (6) à charger peut être transféré dans une position de chargement dans laquelle le rouleau d'enrubannage (6) est orienté au moins sensiblement parallèlement aux rouleaux porteurs (9, 10) et est disposé au moins sensiblement à un niveau de hauteur du support de rouleau (7),
**caractérisée en ce que**
l'équipement d'amenée (5) comporte au moins un chariot de déplacement (12) qui est mobile le long d'un rail de déplacement (13) de l'équipement d'amenée (5) s'étendant parallèlement aux rouleaux porteurs (9, 10),
le chariot de déplacement (12) est apte à recevoir un rouleau d'enrubannage (6) à partir de sa position de chargement au moins en partie à partir du bras de chargement (11), de façon que le rouleau d'enrubannage (6) puisse être ensuite guidé le long du rail de déplacement (13) au moyen du chariot de déplacement (12), le rail de déplacement (13) s'étendant entre les rouleaux porteurs (9, 10) du support de rouleau (7).

2. Presse à balles rondes 1 selon la revendication 1, **caractérisée en ce que** le chariot de déplacement (12) est mobile le long du rail de déplacement (13) entre une position de réception et une position de transfert, le chariot de déplacement (12) se trouvant à un niveau de hauteur plus élevé dans sa position de réception que dans sa position de transfert.

3. Presse à balles rondes (1) selon la revendication 2, **caractérisée en ce que** le rail de déplacement (13) comporte, dans une zone extrême (14) située à l'opposé du bras de chargement (11), une portion descendante (15) au moyen de laquelle le chariot de déplacement (12) peut être transféré de son niveau de hauteur dans sa position de transfert à son niveau de hauteur dans sa position de réception ou inversement, de préférence un écartement (16) de la portion descendante (15) par rapport à une extrémité (17) du rail de déplacement (13) située à l'opposé du bras de chargement (11) correspondant au maximum à 20 %, plus préférentiellement au maximum à 10 %, d'une longueur totale (18) du rail de déplacement (13).

4. Presse à balles rondes (1) selon la revendication 3, **caractérisée en ce que**, à l'extérieur de la portion descendante (15), le rail de déplacement (13) est orienté parallèlement aux axes de rotation (8) des rouleaux porteurs (9, 10).

5. Presse à balles rondes (1) selon une des revendications 1 à 4, **caractérisée par** un équipement de pivotement (19) au moyen duquel les rouleaux porteurs (9, 10) peuvent être transférés depuis une position de travail vers une position de chargement, de façon qu'un rouleau d'enrubannage (6) monté sur les rouleaux porteurs (9, 10) puisse être déplacé en translation au moyen de l'équipement de pivotement (19).

6. Presse à balles rondes (1) selon la revendication 5, **caractérisée en ce que**, dans leur position de chargement, les rouleaux porteurs (9, 10) sont disposés par rapport à un rouleau de freinage (20) de l'équipement d'amenée (1) de façon qu'un rouleau d'enrubannage (6) monté sur les rouleaux porteurs (9, 10) soit monté sans contact par rapport au rouleau de freinage (20).

7. Presse à balles rondes (1) selon une des revendications 1 à 6, **caractérisée en ce que** le bras de chargement (11) est monté pivotant sur deux axes, un premier axe de pivotement (21) étant orienté verticalement et le second axe de pivotement (22) étant orienté horizontalement.

8. Presse à balles rondes (1) selon une des revendications 1 à 7, **caractérisée en ce que** le bras de chargement (11) comporte au moins un galet de roulement fixe (23), de préférence une pluralité de galets de roulement fixes (23), au moyen desquels un rouleau d'enrubannage (6) peut être monté de manière roulante au cours d'un transfert vers le support de rouleau (7).

9. Procédé de chargement d'un équipement d'amenée (5) d'une presse à balles rondes (1) avec un rouleau d'enrubannage (6) neuf, incluant les étapes de procédé suivantes :
a) le rouleau d'enrubannage (6) est transféré sur un bras de chargement (11) au moyen duquel le rouleau d'enrubannage (6) dans sa position chargée est orienté au moins sensiblement parallèlement aux rouleaux porteurs (9, 10) d'un support de rouleau (7) de l'équipement d'amenée (5) et est disposé au moins sensiblement à un niveau de hauteur du support de rouleau (7).
b) le rouleau d'enrubannage (6) est transféré depuis le bras de chargement (11) vers le support de rouleau (7), de sorte que le matériau d'enrubannage (29) tenu en réserve sur le rouleau d'enrubannage (6) peut être mis en œuvre au moyen de l'équipement d'amenée (5),
**caractérisé par** l'étape de procédé suivante :
c) à partir de sa position chargée, le rouleau d'enrubannage (6) est au moins en partie reçu au moyen d'un chariot de déplacement (12) de l'équipement d'amenée (5) monté dans un rail de déplacement (13),
d) au moyen du chariot de déplacement (12), le rouleau d'enrubannage (6) est déplacé parallèlement aux rouleaux porteurs (9, 10) ainsi que sans contact avec les rouleaux porteurs (9, 10).

10. Procédé selon la revendication 9, **caractérisé en ce que** le chariot de déplacement (12) est déplacé entre une position de réception et une position de transfert, le chariot de déplacement (12) étant descendu par rapport aux rouleaux porteurs (9, 10) au cours de son transfert de sa position de réception vers sa position de transfert, de sorte que le rouleau d'enrubannage (6) se trouve en contact avec les rouleaux porteurs (9, 10) lorsque le chariot de déplacement (12) est dans sa position de transfert.

11. Procédé selon la revendication 9 ou 10, **caractérisé en ce que**, avant la réception d'un rouleau d'enrubannage (6) neuf, les rouleaux porteurs (9, 10) sont transférés d'une position de travail vers une position de chargement au moyen d'un équipement de pivotement (19), les rouleaux porteurs (9, 10) étant éloignés du rouleau de freinage (20) de l'équipement d'amenée (5) au cours de leur transfert de la position de travail à la position de chargement.

12. Procédé selon la revendication 11, **caractérisé en ce que** le matériau d'enrubannage (29) tenu en réserve sur le rouleau d'enrubannage (6) est introduit dans l'équipement d'amenée (5) avant que les rouleaux porteurs (9, 10) ne soient transférés dans leur position de travail au moyen de l'équipement de pivotement (19), le rouleau d'enrubannage (6) étant en contact direct avec le rouleau de freinage (20) lorsque les rouleaux porteurs (9, 10) se trouvent dans leur position de travail.
